Europäisches Patentamt

European Patent Office

Office européen des brevets

(19)

(11) Publication number: **0 037 714**
**B1**

(12) **EUROPEAN PATENT SPECIFICATION**

(45) Date of publication of patent specification: **13.07.83**

(51) Int. Cl.³: **B 01 J 3/06**

(21) Application number: **81301433.9**

(22) Date of filing: **02.04.81**

(54) **High pressure, high temperature die assembly.**

(30) Priority: **03.04.80 ZA 801997**

(43) Date of publication of application:
**14.10.81 Bulletin 81/41**

(45) Publication of the grant of the patent:
**13.07.83 Bulletin 83/28**

(84) Designated Contracting States:
**DE FR GB NL SE**

(56) References cited:
**EP - A - 0 001 184**
**FR - A - 2 418 022**
**GB - A - 922 619**
**US - A - 3 191 231**
**US - A - 3 509 597**
**US - A - 3 831 428**

(73) Proprietor: **DE BEERS INDUSTRIAL DIAMOND
DIVISION (PROPRIETARY) LIMITED
8th Floor 45 Main Street
Johannesburg Transvaal (ZA)**

(72) Inventor: **Dyer, Henry Brooke
1504 George Street
Bryanston Transvaal (ZA)**

(74) Representative: **Jones, Alan John et al,
CARPMAELS & RANSFORD 43 Bloomsbury
Square
London, WC1A 2RA (GB)**

Courier Press, Leamington Spa, England

High pressure, high temperature die assembly

This invention relates to a high pressure, high temperature die assembly.

High pressure, high temperature die assemblies form a part of apparatus which is used for generating ultra high pressures and temperatures. It is necessary to generate ultra high pressures and temperatures when manufacturing synthetic diamonds, cubic boron nitride or abrasive compacts containing these abrasives.

Such assemblies consist generally of a die member which is circular in plan and has an aperture extending therethrough and a pair of opposed anvils or pistons adapted to move in and out of the aperture. Defined within the aperture when the anvil or pistons are therein is a reaction chamber.

The aperture may be a double-tapered aperture, with the leading ends of the anvil shaped to fit into the ends thereof. Die assemblies containing an aperture and anvils so shaped are used extensively for the manufacture of synthetic diamonds, cubic boron nitride and abrasive compacts containing these abrasives. An example of this apparatus is described in US—A—2,941,248.

The aperture can also take the form of a cylinder in which event the anvils will act as pistons moving in the cylinder. Apparatus of this nature is described, for example, in US—A—4,197,066.

The anvils and die members for high pressure die assemblies are generally made of a hard material such as cemented carbide, particularly cemented tungsten carbide, as described, for example, in GB—A—922,619.

According to the present invention, there is provided a high pressure, high temperature die assembly including a die member having an aperture formed therethrough and a pair of opposed anvils adapted to move into and out of the aperture, a reaction chamber being defined in the aperture when the anvils are therein characterised in that the die member includes a body of diamond, or cubic boron nitride, abrasive compact and the aperture is formed through this body, and the leading ends of the anvils consist of diamond, or cubic boron nitride, abrasive compact. Thus, the reaction chamber is provided with surrounding walls which are made of abrasive compact, a material of very high compressive strength.

Abrasive compacts consist essentially of a mass of super-hard abrasive particles, i.e. diamond or cubic boron nitride abrasive particles, generally present in an amount of at least 70%, preferably 80 to 90%, by volume of the compact, bonded into a hard conglomerate. Compacts are polycrystalline masses and can replace single large crystals.

Abrasive compacts may be self bonded i.e. the individual particles of the compact may be fused and bonded together without the aid of a metal or like bonding matrix. Alternatively, stronger and more durable compacts are produced when there is a suitable bonding matrix present.

In the case of cubic boron nitride compacts, i.e. compacts in which the abrasive particle is predominantly cubic boron nitride, the bonding matrix, when provided, preferably contains a catalyst (also known as a solvent) for cubic boron nitride growth. Examples of suitable catalysts are aluminium or an alloy or aluminium with nickel, cobalt, iron, manganese or chromium.

In the case of diamond compacts, i.e. compacts in which the abrasive particle is predominantly diamond, the bonding matrix, when provided, preferably contains a solvent for diamond growth. Suitable solvents are metals of Group VIII of the Periodic Table such as cobalt, nickel or iron or an alloy containing such a metal.

For diamond and cubic boron nitride compacts the presence of a solvent or catalyst for the particular abrasive being used in the compact is desirable because then under the conditions necessary for the manufacture of such compacts intergrowth between the particles occurs. As is known in the art, diamond and cubic boron nitride compacts are generally manufactured under conditions of temperature and pressure at which the abrasive particle is crystallographically stable.

It is essential to the die assembly of the invention that the abrasive compact provides the walls for the reaction chamber. This may be achieved by making the die member of the abrasive compact entirely. The abrasive compact may be made using conventional techniques and the aperture then formed through it using conventional cutting methods such as laser cutting, drilling or spark erosion.

Alternatively, the die member may consist of a core of the abrasive compact surrounded by a support ring of cemented carbide. Such die members may be formed from wire-drawing die blanks of the type consisting of the abrasive compact surrounded by and bonded to a cemented carbide support ring. Such wire-drawing die blanks are described and illustrated in the prior art, for example US—A—3,831,428 and EP—A—0 001 184. Again, the aperture may be formed in the compact core using any conventional and known cutting technique such as laser cutting, ultra-sonic drilling or spark erosion.

At least the leading ends of the anvils consist of the abrasive compact. This arrangement has been found to be of particular value when the anvil takes the form of a piston which moves in and out of a cylindrical aperture.

The die assembly may be used as such for generating ultra high pressures in the reaction chamber. Such ultra high pressures are generated by employing the die assembly in conventional high pressure/high temperature apparatus of the type illustrated in the above-mentioned US specifications. Alternatively, the assembly may be used as a pressure intensification unit as a second stage by placing it in the reaction chamber of a conventional high pressure/high temperature apparatus of the type described above.

Embodiments of the invention will now be described with reference to the accompanying drawing in which all three figures illustrate schematically high pressure die assemblies of the invention.

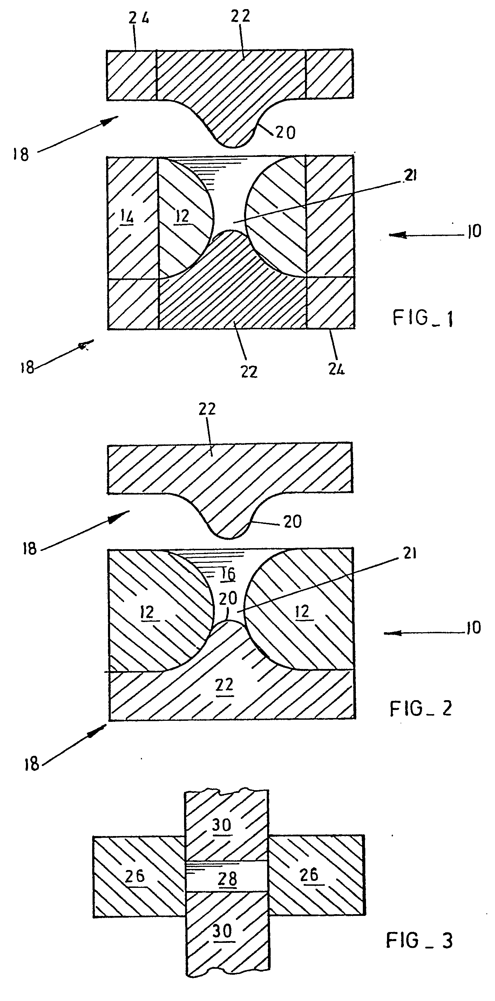

Referring first to Figure 1, there is shown a high pressure die assembly having die member 10 which is circular in plan. This die member consists of a core of the abrasive compact 12 surrounded by and bonded to a cemented carbide supporting ring 14. A double-tapered hole 16 is formed in the abrasive compact core using, for example, laser cutting. The die may be made from a wire-drawing die blank of the type described and illustrated in the above-mentioned publications.

The assembly also includes a pair of opposed anvils 18. The leading ends 20 of the anvils are adapted to move in and out of the aperture 16. When the leading ends 20 are located in the aperture 16 a reaction chamber 21 is defined therein. The anvils are shaped from wire-drawing die blanks and consisting of the abrasive compact 22 surrounded by a cemented carbide ring 24. Shaping of the wire-drawing die blank into the required shape may be achieved using the same cutting techniques which are used for forming the aperture 16.

The die assembly illustrated by Figure 2 is the same as that for Figure 1 except that the anvils and die member are both made of the abrasive compact which is not surrounded by cemented carbide. Like parts carry like numerals. This arrangement has particular application to assemblies wherein the compact is a cubic boron nitride compact.

In the die assemblies of both Figure 1 and Figure 2 suitable gasket or sealing means will in use be provided between the contacting faces of the anvils and the die members. The gasket or sealing means will typically be pyrophyllite.

A piston/cylinder die assembly is illustrated by Figure 3. This assembly consists of a die member 26 circular in plan and having a cylindrical aperture 28. Opposed pistons 30 move in and ot of aperture 28. The pistons 30 and die member 26 are made of cubic boron nitride compact.

## Claims

1. A high pressure, high temperature die assembly including a die member having an aperture formed therethrough and a pair of opposed anvils adapted to move into and out of the aperture, a reaction chamber being defined in the aperture when the anvils are therein characterised in that the die member includes a body of diamond or cubic boron nitride abrasive compact and the aperture is formed through this body, and the leading ends of the anvils consisting of diamond or cubic boron nitride abrasive compact.

2. A die assembly according to Claim 1 wherein the die member consists of abrasive compact.

3. A die assembly according to Claim 1 wherein the die member consists of a core of abrasive compact surrounded by a support backing of cemented carbide.

## Revendications

1. Assemblage de matrice à haute pression et température élevée comprenant un organe de matrice traversé par une ouverture, et une paire d'enclumes opposées agencées pour entrer dans et sortir de l'ouverture, une chambre de réaction étant définie dans l'ouverture lorsque les enclumes y sont situées, caractérisé par le fait que l'organe de matrice comprend un corps en un comprimé abrasif de diamant, ou de nitrure de bore cubique, et que l'ouverture est formée à travers ce corps, et que les extrémités d'attaque des enclumes consistent en un comprimé abrasif de diamant, ou de nitrure de bore cubique.

2. Assemblage de matrice selon la revendication 1, dans lequel l'organe de matrice consiste en un comprimé abrasif.

3. Assemblage de matrice selon la revendication 1, dans lequel l'organe de matrice consiste en un noyau de comprimé abrasif entouré par un revêtement formant support en carbure cémenté.

## Patentansprüche

1. Hochdruck-Hochtemperatur-Matrizenzusammenbau aus einem Matrizenglied mit darin ausgebildeter, durchgehender Öffnung und einem Paar gegenüberliegender, in die Öffnung hinein- und aus ihr herausbewegbarer Ambosse, und mit einer in der Öffnung ausgebildeten Reaktionskammer, wenn die Ambosse in ihr sind, dadurch gekennzeichnet, daß das Matrizenglied einen Körper aus einem Schleifmittelpreßmaterial aus Diamant oder kubischem Bornitrid einschließt und die Öffnung durch diesen Körper hindurch ausgebildet ist, und daß die vorderen Enden der Ambosse aus einem Schleifmittelpreßmaterial aus Diamant oder kubischem Bornitrid bestehen.

2. Matrizenzusammenbau nach Anspruch 1, bei dem das Matrizenglied aus Schleifmittelpreßmaterial besteht.

3. Matrizenzusammenbau nach Anspruch 1, bei dem das Matrizenglied aus einem Kern aus Schleifmittelpreßmaterial besteht, das von einer Abstützunterlage aus gesintertem Carbid umgeben ist.

FIG_1

FIG_2

FIG_3